# EUROPEAN PATENT APPLICATION

(11) **EP 4 335 694 A1**
(43) Date of publication of application: **13.03.2024**
(21) Application number: 22828311.5
(22) Date of filing: 16.06.2022
(51) Int. Cl.: B60N 2/427, B60N 2/58, B60R 21/207

(54) **VEHICLE SEAT, AND METHOD FOR MANUFACTURING VEHICLE SEAT**

(30) Priority: 23.06.2021 JP 2021104435
(71) Applicant: Delta Kogyo Co., Ltd., Aki-gun, Hiroshima 735-8501 (JP)
(72) Inventor: TOMITA, Toshihiko, Aki-gun, Hiroshima 730-8670 (JP); KOBAYASHI, Noritoshi, Aki-gun, Hiroshima 730-8670 (JP); SATO, Yuji, Aki-gun, Hiroshima 735-8501 (JP); INOUE, Daiki, Aki-gun, Hiroshima 735-8501 (JP)
(74) Representative: Müller-Boré & Partner Patentanwälte PartG mbB
(86) International application number: PCT/JP2022/024061
(87) International publication number: WO 2022/270394

(57) **Abstract**

Provided is a vehicle seat that has high designability and achieves control of a deployment speed of a side airbag. A seat (1) includes: a bolster part (4) located on a side of a top board part; a shoulder part (5) located above the bolster part (4); a cover (6) for each the bolster part (4) and the shoulder part (5); and an airbag sleeve (15) provided in the bolster part (4). The airbag sleeve (15) includes; a first section (15a) extending along a first tear line (17) serving as a seam of a first cover piece (11) and a second cover piece (12); and a second section (15b) extending across a second lateral directional line (20) serving as a seam of the second cover piece (12) and a fourth cover piece (14). The first section (15a) is sewn with the second cover piece (12) along the first tear line (17). The second section (15b) is sewn with a set of the second cover piece (12) and the fourth cover piece (14) in such a manner as to enclose and sandwich a seam allowance extending along the second lateral directional line (20).

## Description

### Technical Field

The present invention relates to a vehicle seat, and a method for manufacturing the vehicle seat.

### Background Art

A vehicle seat which includes a seatback accommodating an airbag device is preliminarily provided with an airbag deploying part (hereinafter, referred to as a "tear line") serving as a seam extending in a longitudinal direction on a cover on a side part of the seatback to deploy an airbag when a vehicle is involved in a collision. Such a tear line has been conventionally formed on only each of bolster parts respectively located on both sides of a top board part of a seatback in a width direction and extending frontward and lateralward from the seatback around body side portions of an occupant, the top board part coming into contact with the back of the occupant. However, in recent years, an airbag device has become larger, and such a design as to form a tear line on a shoulder part located above the bolster part and extending frontward and lateralward around a shoulder of an occupant is developed.

For instance, each of Patent Literatures 1 to 2 discloses a seat having the aforementioned design. As shown in Fig. 9, Patent Literature 1 describes a seatback which includes a cover located on a side part thereof and including four cover pieces S1 to S4, i.e., two cover pieces S1, S2 forming surfaces of shoulder parts, and two cover pieces S3, S4 forming surfaces of bolster parts respectively located below the shoulder parts. The four cover pieces S1 to S4 are sewn together along a lateral directional line Y1, and an upper tear line Y2 and a lower tear line Y3 each extending in a longitudinal direction. In the seatback, webbing cloths 41, 42 are sewn respectively with portions of the lower cover pieces S3, S4 around the lower tear line Y3, and the webbing cloths 41, 42 are respectively connected to portions of the upper cover pieces S1, S2 around the upper tear line Y2 via connecting cloths 43, 44 so that the upper tear line Y2 and the lower tear line Y3 each extending in the longitudinal direction tear prior to the lateral directional line Y1 when a side airbag deploys.

As shown in Fig. 10 to Fig. 11, Patent Literature 2 describes a seatback which includes two sewn parts consisting of: a longitudinal directional tear line 56 between a seat surface cover part 55a (covering a seat front surface) and a frame cover part 55b (covering a seat side surface) of a seat cover 55; and a lateral directional line 57 intersecting the tear line 56. A pair of upper and lower webbing cloths 58, 59 have their one ends sewn together at upper and lower positions on the longitudinal directional tear line 56 and across the lateral directional line 57. This aims at firstly tearing the longitudinal directional tear line 56 formed by sewing the webbing cloths 58, 59 together and subsequently tearing the lateral directional line 57 under a deployment pressure of an airbag (not shown) of an airbag device 51.

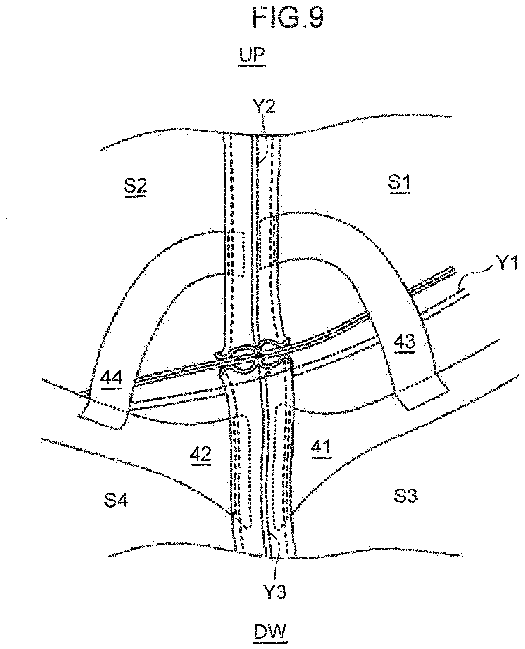

In the seatback described in Patent Literature 1, the connecting cloths 43, 44 shown in Fig. 9 extend across the lateral directional line Y1. Thus, in an attempt to form the lateral line Y1 after forming the upper and lower tear lines Y2, Y3 through sewing, the connecting cloths 43, 44 would hinder forming of a three-dimensional section, like a pull-in section, along the lateral directional line Y1, the section having such a shape that the lateral directional line Y1 protrudes from faces of the cover pieces S1 to S4 in a normal direction, i.e., frontward from the paper of Fig. 9. For instance, the connecting cloths 43, 44 may fold down a seam allowance extending along the lateral directional line Y1. This causes a problem of a failure in realizing a seat having high designability.

By contrast, the seatback described in Patent Literature 2 includes the lateral directional line 57 formed through sewing in the same manner as the longitudinal directional tear line 56 shown in Fig. 9 to Fig. 10, and thus has a possibility that the lateral directional line 57 entirely tears to open prior to the tear line 56 when a side airbag deploys, and faces a problem of difficulty in controlling a deployment speed of the side airbag.

### Citation List

### Patent Literature

Patent Literature 1: Japanese Unexamined Patent Publication No. 2014-184900
Patent Literature 2: Japanese Patent Publication Number 3975427

### Summary of Invention

The present invention has been achieved in consideration of the circumstances described above, and has an object of providing a vehicle seat that has high designability and achieves control of a deployment speed of a side airbag.

A vehicle seat of the present invention includes a seatback accommodating an airbag device therein. The seatback includes: a top board part contactable with the back of an occupant; a bolster part located on a side of the top board part; a shoulder part located above the bolster part; a cover forming a surface of each of the bolster part and the shoulder part; and an airbag sleeve provided in at least one of the bolster part and the shoulder part to support the cover from inside when an airbag deploys. The cover includes; a first cover piece located on the bolster part and adjoining the top board part; a second cover piece located on the bolster part and being on a frame side farther away from the top board part than the first cover piece; a third cover piece located on the shoulder part and adjoining an upper side of the first cover piece; and a fourth cover piece located on the shoulder part and adjoining an upper side of the second cover piece. The first cover piece and the second cover piece are sewn together along a first tear line extending in a longitudinal direction of the seatback. The third cover piece and the fourth cover piece are sewn together along a second tear line extending continuously from the first tear line in the longitudinal direction. The first cover piece and the third cover piece are sewn together along a first lateral directional line extending in a crossing direction intersecting the first tear line. The second cover piece and the fourth cover piece are sewn together along a second lateral directional line extending continuously from the first lateral directional line in the crossing direction. The airbag sleeve includes: a first section extending along the first tear line or the second tear line; and a second section extending across the first lateral directional line or the second lateral directional line. The first section is sewn with at least one of the first to fourth cover pieces along the first tear line or the second tear line. The second section is sewn with at least one of a set of the first cover piece and the third cover piece and a set of the second cover piece and the fourth cover piece in such a manner as to enclose and sandwich a seam allowance extending along the first lateral directional line or the second lateral directional line.

In the description, the term "top board part" represents a main part of the seatback, that is, a substantially board-shaped part (main board part) contactable with the back of an occupant. The term "frame side" represents a side or side portion constituting a side surface of the seatback and facing outward (side portion) on the bolster part in a width direction.

### Brief Description of Drawings

Fig. 1 is a perspective view of an overall configuration of a vehicle seat according to an embodiment of the present invention.
Fig. 2 is a cross-sectional view taken along the line II-II in Fig. 1.
Fig. 3 is a side view of a seatback in Fig. 1.
Fig. 4 is an enlarged view of a portion A of the seat in Fig. 1 showing sewn portions of first to fourth cover pieces.
Fig. 5 is a perspective view of a back surface (inside) portion of a cover of the seatback shown in Fig. 1, in which first to second airbag sleeves are attached to the cover.
Fig. 6 is an enlarged view of the first airbag sleeve and a periphery thereof in Fig.5.
Fig. 7 is a cross-sectional view taken along the line VII-VII in Fig. 6.
Fig. 8 is a cross-sectional view taken along the line VIII-VIII in Fig. 6.
Fig. 9 is an enlarged view of sewn portions of cover pieces of a seatback described in Patent Literature 1 showing an example conventional seat.
Fig. 10 is a side view of a seatback described in Patent Literature 2 showing another example conventional seat.
Fig. 11 is an illustration of a state of the seatback in Fig. 10 in deployment of the airbag.

### Description of Embodiments

Hereinafter, a preferable embodiment of the present invention will be described with reference to the accompanying drawings. The drawings appropriately show a "vehicular frontward and rearward direction X", a "vehicular width direction Y", and an "upward and downward direction Z" by using arrows.

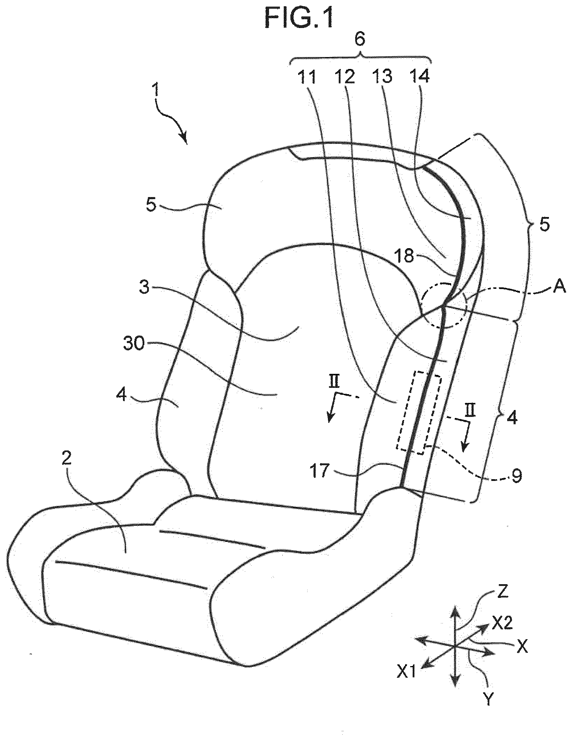

A vehicle seat (hereinafter, referred to as a "seat 1") shown in Fig. 1 is configured to include a seatback 3 accommodating an airbag device 9. Specifically, the seat 1 includes: a seat cushion 2 contactable with the buttocks of an occupant; a seatback 3 contactable with the back of the occupant; and the airbag device 9. The airbag device 9 is accommodated in a side portion (right portion in Fig. 1) of the seatback 3 that is closer to an unillustrated door of a vehicle.

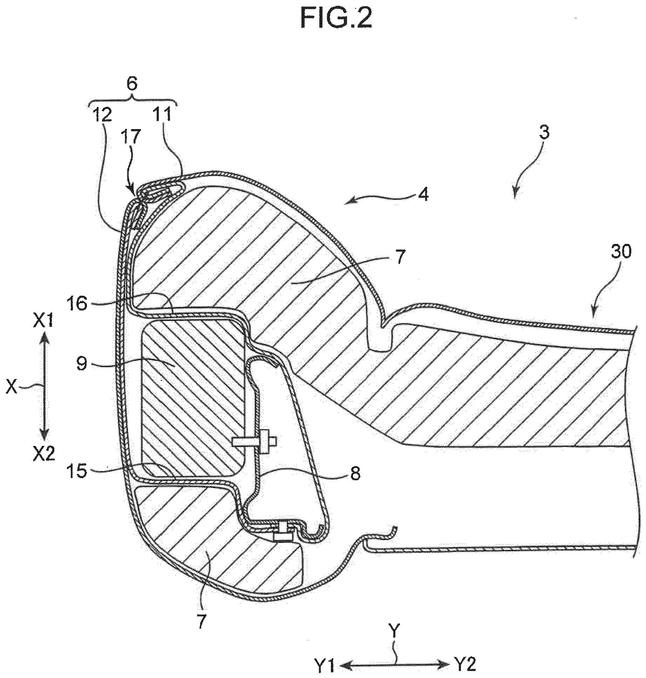

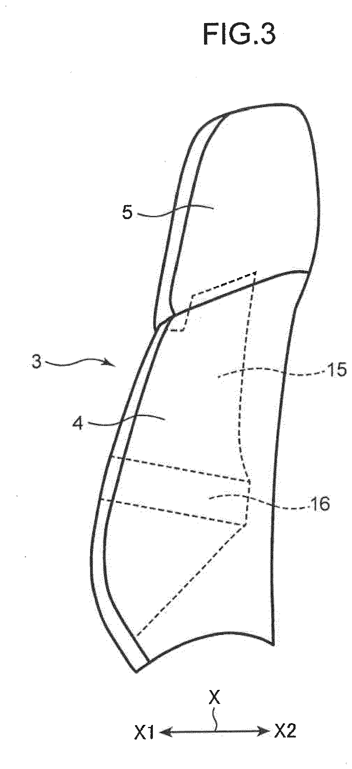

As shown in Fig. 1 to Fig. 5, the seatback 3 includes: a top board part 30 facing vehicular frontward X1 and being contactable with the back of the occupant; a pair of bolster parts 4 located on both sides of the top board part 30 and adjoining thereto in the vehicular width direction Y; a pair of shoulder parts 5 located respectively above the pair of bolster parts 4; a cover 6 forming a surface of each bolster part 4 and each shoulder part 5; and a first airbag sleeve 15 and a second airbag sleeve 16 each provided in at least one of the bolster part 4 and the shoulder part 5 (the bolster part 4 in the embodiment) in a side portion (on the right side in Fig. 1, and on the left side in Fig. 2) of the seatback 3 that accommodates the airbag device 9 to support the cover 6 from inside when an airbag deploys.

Each bolster part 4 has a longitudinal cushion shape extending frontward and lateralward from the seatback 3 around a corresponding body side portion of the occupant. As shown in Fig. 1 to Fig. 3, the bolster part 4 in the embodiment includes: a first cover piece 11 and a second cover piece 12 of the cover 6 to be described later; a cushion pad 7 covered with the first cover piece 11 and the second cover piece 12; and a frame 8 supporting the cushion pad 7. The bolster part 4 of the pair of bolster parts 4 that is located outward Y1 (Fig. 2) in the vehicular width direction accommodates the airbag device 9 and the airbag device 9 is fixedly attached to the frame 8.

Each shoulder part 5 has a portion extending frontward and lateralward around a corresponding shoulder of the occupant. In the embodiment, the pair of shoulder parts 5 integrally extend in the width direction Y as shown in Fig. 1, but may be separated from each other.

A surface of each of the bolster part 4 and the shoulder part 5 (on the right side in Fig. 1) where the airbag device 9 is accommodated is formed by the cover 6 including a plurality of cover pieces sewn together as shown in Fig. 1 to Fig. 2 and Fig. 5 to Fig. 6.

The cover 6 includes four cover pieces 11 to 14 as shown in Fig. 1 to 2 and Fig. 4 to Fig. 6. Specifically, the cover 6 includes: a first cover piece 11 located on the bolster part 4 and adjoining the top board part 30 (i.e., on the top board part side); a second cover piece 12 located on the bolster part 4 and being on a frame side (i.e., in a side portion to form a side surface of the seatback 3) farther away from the top board part 30 than the first cover piece 11; a third cover piece 13 located on the shoulder part 5 and adjoining an upper side (i.e., on the top board part side) of the first cover piece 11; and a fourth cover piece 14 located on the shoulder part 5 and adjoining an upper side (i.e., on the frame side) of the second cover piece 12.

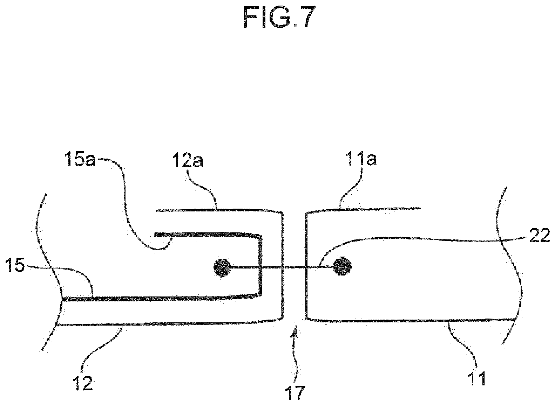

First, sewing of the bolster part 4 will be described. As shown in Fig. 1 to Fig. 2 and Fig. 4 to Fig. 7, the first cover piece 11 and the second cover piece 12 are sewn together along a first tear line 17 extending in a longitudinal direction D1 of the seatback 3. Specifically, as shown in Fig. 7, an end 11a on a side surface of the first cover piece 11 and an end 12a of the second cover piece 12 face each other and are sewn together by a sewing thread 22 to form the first tear line 17 extending in the longitudinal direction D1. Besides, a first section 15a of the first airbag sleeve 15 to be described later is sewn with the end 12a of the second cover piece 12 by the sewing thread 22 in the inside of the end 12a that is folded back.

Besides, the third cover piece 13 and the fourth cover piece 14 are sewn together for the shoulder part 5. These cover pieces are sewn together along a second tear line 18 extending continuously from the first tear line 17 in the longitudinal direction D1, as shown in Fig. 1 and Fig. 4 to Fig. 6.

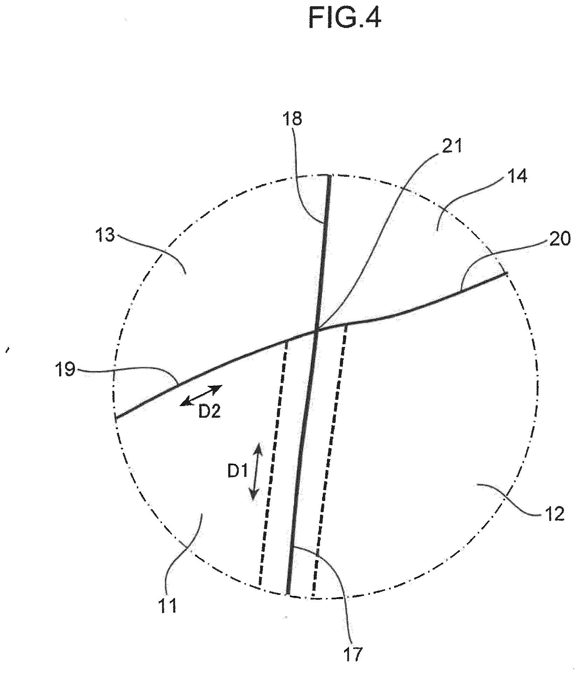

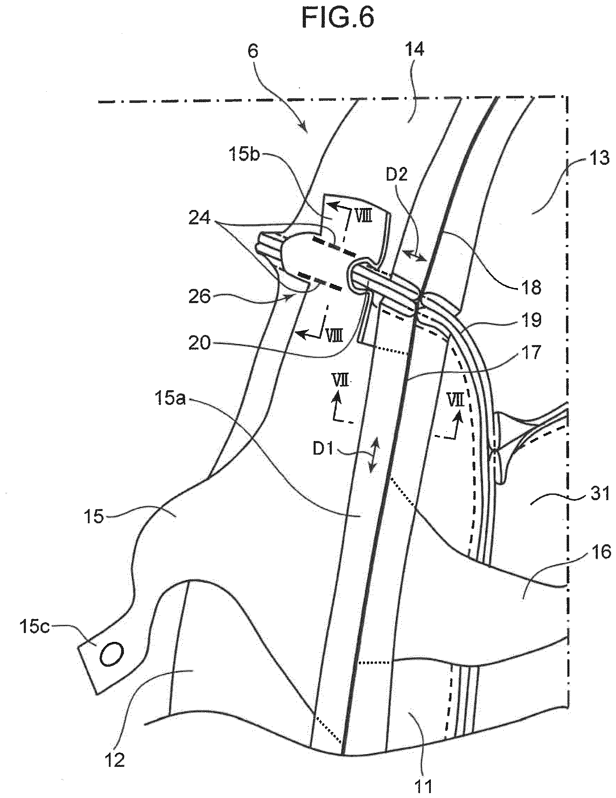

As shown in Fig. 4 to Fig.6, the first cover piece 11 and the third cover piece 13 aligning in the upward and downward direction Z are sewn together along a first lateral directional line 19 extending in a lateral direction D2 or crossing direction intersecting the first tear line 17. As shown in Fig. 6, the first lateral directional line 19 extends downward as advancing toward the top board part 30 of the seatback 3, and forms a sewn portion of the first cover piece 11 and a cover piece 31 of the top board part 30.

The lateral direction D2 is sufficient to intersect the longitudinal direction D1 without limitation to a direction perpendicularly intersecting the longitudinal direction D1, and thus may be slightly oblique to the perpendicularly-intersecting direction.

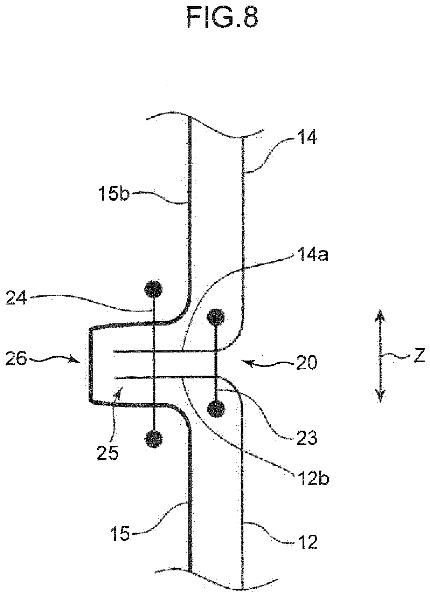

The second cover piece 12 and the fourth cover piece 14 aligning in the upward and downward direction Z are sewn together along a second lateral directional line 20 extending continuously from the first lateral directional line 19 in the lateral direction D2. Specifically, as shown in Fig. 8, an upper end 12b of the second cover piece 12 and a lower end 14a of the fourth cover piece 14 face each other and are sewn together by a sewing thread 23 to form the second lateral directional line 20 extending in the lateral direction D2.

As shown in Fig. 4, the two tear lines, i.e., the first tear line 17 and the second tear line 18, each extending in the longitudinal direction D1, and the two lateral directional lines, i.e., the first lateral directional line 19 and the second lateral directional line 20, each extending in the lateral direction D2, meet at a meeting point 21.

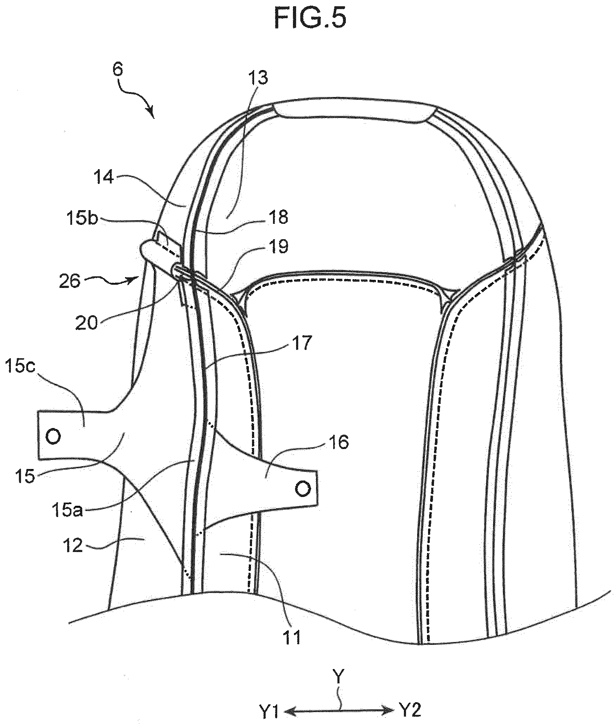

As shown in Fig. 2 to Fig. 3 and Fig. 5 to Fig. 6, in the embodiment, one end (specifically, the first section 15a to be described later) of the first airbag sleeve 15 is sewn with the second cover piece 12 along the first tear line 17 extending in the longitudinal direction D1 by the sewing thread 22 (see Fig. 7) and one end (specifically, a left end in Fig. 5 to Fig. 6) of the second airbag sleeve 16 is sewn with the first cover piece 11 by the sewing thread 22.

As shown in Fig. 2, the first airbag sleeve 15 extends inside the second cover piece 12 to pass outward Y1 of the airbag device 9 in the vehicular width direction Y, and has the one end (specifically, the first section 15a in Fig. 5 to Fig. 7) sewn with the second cover piece 12 near the first tear line 17 and another end fixed to the frame 8. The second airbag sleeve 16 extends inward Y2 of the airbag device 9 in the vehicular width direction Y, and has the one end sewn with the first cover piece 11 near the first tear line 17 and another end fixedly attached to the frame 8. No cushion pad 7 is provided outward Y1 of the airbag device 9 (on the frame side of the seat 1) in the vehicular width direction Y, and the second cover piece 12 and the first airbag sleeve 15 solely shield the airbag device 9 from the outside of the seat.

Specifically, as shown in Fig. 5 to Fig. 8, the first airbag sleeve 15 in the embodiment includes: the first section 15a extending in a direction along the first tear line 17 to ensure tearing of the first tear line 17 when the airbag deploys; a second section 15b extending across the second lateral directional line 20, i.e., extending in a direction intersecting the second lateral directional line 20, to relatively delay tearing of the second lateral directional line 20 when the airbag deploys; and a third section 15c to be fixedly attached to the frame 8 (see Fig. 2). The concept of the airbag sleeve of the present invention includes the first airbag sleeve 15.

As shown in Fig. 7, the first section 15a is sewn with the second cover piece 12 on a back surface thereof along the first tear line 17.

Besides, as shown in Fig. 8, the second section 15b is sewn with a set of the second cover piece 12 and the fourth cover piece 14 in such a manner as to enclose and sandwich a seam allowance extending along the second lateral directional line 20. Specifically, the second section 15b is sewn with an overlapping part 25 of the end 12b of the second cover piece 12 and the end 14a of the fourth cover piece 14 in the seam allowance extending along the second lateral directional line 20 by a sewing thread 24 in a state of enclosing the overlapping part 25. In this manner, a firm enclosing portion 26 (see Fig. 5 to Fig. 6 and Fig. 8) is formed in such a manner that the second section 15b encloses and sandwiches the overlapping part 25.

The seat 1 having the above-described configuration is manufactured through the following steps (I) to (V):
(I) a cover piece preparation step of preparing, as components constituting the cover 6 forming a surface of each of the bolster part 4 and the shoulder part 5, the first cover piece 11 to be located on the bolster part 4 and adjoin the top board part 30, the second cover piece 12 to be located on the bolster part 4 and be on a frame side farther away from the top board part 30 than the first cover piece 11, the third cover piece 13 to be located on the shoulder part 5 and adjoin an upper side of the first cover piece 11, and the fourth cover piece 14 to be located on the shoulder part 5 and adjoin an upper side of the second cover piece 12;
(II) a first section sewing step of sewing the first section 15a of the first airbag sleeve 15 with at least one of the first to fourth cover pieces 11 to 14, i.e., the second cover piece 12 in the embodiment, along the first tear line 17;
(III) a tear line sewing step of sewing the first cover piece 11 and the second cover piece 12 on the bolster part 4 together along the first tear line 17 extending in the longitudinal direction D1 of the seatback 3, and sewing the third cover piece 13 and the fourth cover piece 14 on the shoulder part 5 together along the second tear line 18 extending in the longitudinal direction D1;
(IV) a lateral directional line sewing step of sewing the first cover piece 11 and the third cover piece 13 together along the first lateral directional line 19 extending in the lateral direction D2 intersecting the first tear line 17, and sewing the second cover piece 12 and the fourth cover piece 14 together along the second lateral directional line 20 extending continuously from the first lateral directional line 19 in the lateral direction D2; and
(V) a second section sewing step of sewing the second section 15b of the first airbag sleeve 15 with the set of the second cover piece 12 and the fourth cover piece 14 in such a manner as to enclose and sandwich the seam allowance (specifically, the overlapping part 25 in Fig. 8) extending along the second lateral directional line 20.

The first section sewing step (II) and the tear line sewing step (III) may be simultaneously executed in a state where the first section 15a of the first airbag sleeve 15 overlaps at least one of the first to fourth cover pieces 11 to 14 along the first tear line 17 or the second tear line 18.

### Characteristics of the embodiment

(1) In the seat 1 in the embodiment, as shown in Fig. 5 to Fig. 6 and Fig. 8, the second section 15b of the airbag sleeve is sewn with the set of the second cover piece 12 and the fourth cover piece 14 in such a manner as to enclose and sandwich the seam allowance extending along the second lateral directional line 20. This allows the second lateral directional line 20 serving as a boundary between the shoulder part 5 and the bolster part 4 to form a three-dimensional section as being pulled in, and a seat having high designability can be provided.

The second section 15b of the first airbag sleeve 15 is sewn across or to intersect the seam allowance extending along the second lateral directional line 20, and thus, a tearing strength of the second lateral directional line 20 increases. This prevents the second lateral directional line 20 from tearing prior to the first tear line 17 and the second tear line 18, and enables the airbag accommodated in the airbag device 9 to smoothly deploy as intended. As a result, control of a deployment speed of the airbag is achieved.

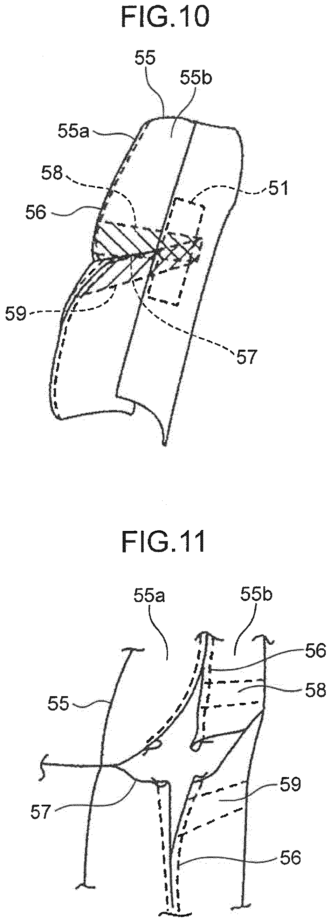

The seat 1 in the embodiment needs fewer airbag sleeves to be used than a conventional seat having a structure (see Fig. 10 to Fig. 11) including two airbag sleeves (webbing cloths) respectively at upper and lower positions across a lateral directional line. Further, only two portions of a tear line (the first tear line 17) and a lateral directional line (the second lateral directional line 20) are required for sewing of the first airbag sleeve 15, and there is no need of replacement with a thicker thread for the sewing of the first airbag sleeve 15 lead to good operability.

(2) In the seat 1 in the embodiment, as shown in Fig. 1 to Fig. 2, the bolster part 4 accommodates the airbag device 9. As shown in Fig. 5 to Fig. 7, the first section 15a of the first airbag sleeve 15 is sewn with the second cover piece 12 along the first tear line 17. The second section 15b is sewn with the set of the second cover piece 12 and the fourth cover piece 14 in such a manner as to enclose and sandwich the seam allowance extending along the second lateral directional line 20.

This configuration enables more accurate control of the deployment speed. Specifically, in the configuration in which the bolster part 4 accommodates the airbag device 9, the largest pressure is applied to the second cover piece 12 of the first cover piece 11 and the second cover piece 12 constituting the surface of the bolster part 4 when the airbag device 9 comes into deployment, the second cover piece 12 being on the frame side to form a side surface of the seat farther away from the top board part 30. Hence, the first tear line 17 extending in the longitudinal direction D1 with the seam allowance of the second cover piece 12 and the second lateral directional line 20 extending in the lateral direction D2 or crossing direction intersecting the longitudinal direction D1 are likely to easily tear. Under the circumstances, in the configuration described above, first, sewing of the first section 15a of the first airbag sleeve 15 with the second cover piece 12 along the first tear line 17 makes the first tear line 17 be more likely to tear when the airbag deploys. Further, sewing of the second section 15b with the set of the second cover piece 12 and the fourth cover piece 14 in such a manner as to enclose and sandwich the seam allowance extending along the second lateral directional line 20 prevents the second lateral directional line 20 from tearing prior to the first tear line 17 when the airbag deploys.

(3) In the seat 1 in the embodiment, as shown in Fig. 5 to Fig. 6 and Fig. 8, the second section 15b of the first airbag sleeve 15 is sewn with an overlapping part 25 of the end 12b of the second cover piece 12 and the end 14a of the fourth cover piece 14 in the seam allowance extending along the second lateral directional line 20 by the sewing thread 24 in a state of enclosing and sandwiching the overlapping part 25.

In this configuration, the overlapping part 25 of the end 12b of the second cover piece 12 and the end 14a of the fourth cover piece 14 in the seam allowance extending along the second lateral directional line 20 is sewn not only by the sewing thread 23 on the second lateral directional line 20 but also by the sewing thread 24 in such a manner that the second section 15b of the first airbag sleeve 15 encloses and sandwiches the overlapping part 25. In other words, the overlapping part 25 is dually sewn at two different portions. The sewing attains reliable prevention of tearing of the second lateral directional line 20 at the deployment of the airbag.

(4) The method for manufacturing a vehicle seat in the embodiment includes: the first section sewing step of sewing the first section 15a of the first airbag sleeve 15 with the second cover piece 12 along the first tear line 17; and the second section sewing step to be subsequently executed to sew the second section 15b of the airbag sleeve with the set of the second cover piece 12 and the fourth cover piece 14 in such a manner as to enclose and sandwich the seam allowance extending along the second lateral directional line 20.

This allows, in the same manner as (1) described above, the first lateral directional line 19 or the second lateral directional line 20 each serving as a boundary between the shoulder part 5 and the bolster part 4 to form a three-dimensional section as being pulled in, and a seat having high designability can be provided.

In the second section sewing step, the second section 15b of the first airbag sleeve 15 is sewn across or to intersect the seam allowance extending along the second lateral directional line 20, and thus, a tearing strength of the second lateral directional line 20 increases in the same manner as (1) described above. This prevents the second lateral directional line 20 from tearing prior to the first tear line 17 and the second tear line 18 each being a longitudinal directional line, and enables the airbag in the airbag device 9 to smoothly deploy as intended. As a result, it is possible to manufacture a seat that achieves control of a deployment speed.

Besides, in the same manner as (1) described above, the manufacturing method needs fewer air bag sleeves to be used, requires only two portions of a tear line and a lateral directional line for sewing of the first airbag sleeve 15, and has no need of replacement with a thicker thread for the sewing of the first airbag sleeve 15. The method thus achieves good operability.

The method for manufacturing a vehicle seat enables simultaneous execution of the first section sewing step and the tear line sewing step in a state where the first section 15a of the first airbag sleeve 15 overlaps at least one of the first to fourth cover pieces 11 to 14 along the first tear line 17 or the second tear line 18. This configuration enables simultaneous execution of sewing of the first section 15a of the first airbag sleeve 15 and sewing of the cover pieces 11, 12 together along the first tear line 17 (or sewing of the cover pieces 13, 14 along the second tear line 18), resulting in improving the operability.

### Modifications

(A) Although the embodiment provides the first airbag sleeve 15 in the bolster part 4 as shown in Fig. 2 to Fig. 3, the present invention is not limited thereto, and the first airbag sleeve may be provided in the shoulder part 5. The first airbag sleeve 15 may be provided in each of the bolster part 4 and the shoulder part 5. This configuration can exert the same operational effect as those described in (1) to (4) above.
(B) Although the cover 6 includes the four cover pieces 11 to 14 in the embodiment, the number of cover pieces is not limited thereto, and the cover may include five or more cover pieces depending on a design of the seat 1.
(C) Although the first section 15a of the first airbag sleeve 15 is sewn with the second cover piece 12 being on the frame side along the first tear line 17 and the second section 15b is sewn with the set of the second cover piece 12 and the fourth cover piece 14 in such a manner as to enclose and sandwich the seam allowance extending along the second lateral directional line 20 in the embodiment as shown in Fig. 5 to Fig. 6, the present invention is not limited thereto.

In the present invention, the first section 15a may be sewn with at least one of the first to fourth cover pieces 11 to 14 along the first tear line 17 or the second tear line 18, and the second section 15b may be sewn with at least one of the set of the first cover piece 11 and the third cover piece 13 and the set of the second cover piece 12 and the fourth cover piece 14 in such a manner as to enclose and sandwich the seam allowance extending along the first lateral directional line 19 or the second lateral directional line 20.

Accordingly, modifications of the present invention may encompass various changes in the arrangement of the first section 15a and the second section 15b of the first airbag sleeve 15 as described below.

For instance, the first section 15a may be sewn with the first cover piece 11 being closer to the top board part along the first tear line 17. Alternatively, in a case of arranging two first airbag sleeves 15 sandwiching the first tear line 17, their first sections 15a may be sewn respectively with the first cover piece 11 being closer to the top board part and the second cover piece 12 being on the frame side along the first tear line 17. Further alternatively, in a case of arranging the first airbag sleeve 15 in the shoulder part 5, the first section 15a may be sewn with either the third cover piece 13 or the fourth cover piece 14 along the second tear line 18. Moreover, when two first airbag sleeves 15 are arranged in this case, their first sections 15a may be respectively sewn with the third cover piece 13 and the fourth cover piece 14.

The second section 15b may be sewn with the set of the first cover piece 11 and the third cover piece 13 in such a manner as to enclose and sandwich a seam allowance extending along the first lateral directional line 19. Alternatively, in the case of providing two first airbag sleeves 15, one of their two second sections 15b may be sewn with the set of the first cover piece 11 and the third cover piece 13 in such a manner as to enclose and sandwich the seam allowance extending along the first lateral directional line 19, and the other second section may be sewn with the set of the second cover piece 12 and the fourth cover piece 14 in such a manner as to enclose and sandwich the seam allowance extending in the second lateral directional line 20.

It is seen from these perspectives that a configuration in which the first section 15a is sewn with at least one of the cover pieces 11 to 14 along the first tear line 17 or the second tear line 18 and the second section 15b is sewn with the set of the cover pieces 11, 13 or the set of the cover pieces 12, 14 in such a manner as to enclose the seam allowance along the first lateral directional line 19 or the second lateral directional line 20 can exert the same operational effect as those described in (1) to (4) above regardless of various changes in the arrangement of the first section 15a and the second section 15b of the first airbag sleeve 15.

### Summary of Embodiment

The embodiment is summarized in the following manner.

A vehicle seat in the embodiment includes a seatback accommodating an airbag device therein. The seatback includes: a top board part contactable with the back of an occupant; a bolster part located on a side of the top board part; a shoulder part located above the bolster part; a cover forming a surface of each of the bolster part and the shoulder part; and an airbag sleeve provided in at least one of the bolster part and the shoulder part to support the cover from inside when an airbag deploys. The cover includes; a first cover piece located on the bolster part and adjoining the top board part; a second cover piece located on the bolster part and being on a frame side farther away from the top board part than the first cover piece; a third cover piece located on the shoulder part and adjoining an upper side of the first cover piece; and a fourth cover piece located on the shoulder part and adjoining an upper side of the second cover piece. The first cover piece and the second cover piece are sewn together along a first tear line extending in a longitudinal direction of the seatback. The third cover piece and the fourth cover piece are sewn together along a second tear line extending continuously from the first tear line in the longitudinal direction. The first cover piece and the third cover piece are sewn together along a first lateral directional line extending in a crossing direction intersecting the first tear line. The second cover piece and the fourth cover piece are sewn together along a second lateral directional line extending continuously from the first lateral directional line in the crossing direction. The airbag sleeve includes: a first section extending along the first tear line or the second tear line; and a second section extending across the first lateral directional line or the second lateral directional line. The first section is sewn with at least one of the first to fourth cover pieces along the first tear line or the second tear line. The second section is sewn with at least one of a set of the first cover piece and the third cover piece and a set of the second cover piece and the fourth cover piece in such a manner as to enclose and sandwich a seam allowance extending along the first lateral directional line or the second lateral directional line.

In this configuration, the second section of the airbag sleeve is sewn with at least one of the set of the first cover piece and the third cover piece and the set of the second cover piece and the fourth cover piece in such a manner as to enclose and sandwich the seam allowance extending along the first lateral directional line or the second lateral directional line. This allows the first lateral directional line or the second lateral directional line each serving as a boundary between the shoulder part and the bolster part to form a three-dimensional section as being pulled in, and a seat having high designability can be provided.

The second section of the airbag sleeve is sewn across or to intersect the seam allowance extending along the first lateral directional line or the second lateral directional line. Hence, a tearing strength of the first lateral directional line or the second lateral directional line increases. This prevents the first lateral directional line or the second lateral directional line from tearing prior to the first tear line and the second tear line, and enables the airbag to smoothly deploy as intended. As a result, control of a deployment speed is achieved.

In the vehicle seat, preferably, the bolster part accommodates the airbag device, the first section is sewn with the second cover piece along the first tear line, and the second section is sewn with the set of the second cover piece and the fourth cover piece in such a manner as to enclose and sandwich the seam allowance extending along the second lateral directional line.

This configuration enables more accurate control of the deployment speed. Specifically, in the configuration in which the bolster part accommodates the airbag device, the largest pressure is applied to the second cover piece of the first cover piece and the second cover piece constituting the surface of the bolster part when the airbag deploys, the second cover piece being on the frame side to form a side surface of the seat farther away from the top board part. Hence, the first tear line extending in the longitudinal direction with the seam allowance of the second cover piece and the second lateral directional line extending in the crossing direction intersecting the longitudinal direction are likely to easily tear. Under the circumstances, in the configuration described above, sewing of the first section of the airbag sleeve with the second cover piece along the first tear line makes the first tear line be more likely to tear when the airbag deploys. Further, sewing of the second section with the set of the second cover piece and the fourth cover piece in such a manner as to enclose and sandwich the seam allowance extending along the second lateral directional line prevents the second lateral directional line from tearing prior to the first tear line when the airbag deploys.

In the vehicle seat, the second section is preferably sewn with an overlapping part of respective ends of the first cover piece and the third cover piece in a seam allowance extending along the first lateral directional line or with an overlapping part of respective ends of the second cover piece and the fourth cover piece in the seam allowance extending along the second lateral directional line in a state of enclosing and sandwiching the overlapping part.

In this configuration, the overlapping part of the respective ends of the cover pieces in the seam allowance extending along the first lateral directional line or the second lateral directional line is sewn not only on the first lateral directional line or the second lateral directional line but also with the second section of the airbag sleeve. In other words, the overlapping part is dually sewn at two different portions. The sewing attains reliable prevention of tearing of the first lateral directional line or the second lateral directional line at the deployment of the airbag.

A method for manufacturing a vehicle seat in the embodiment is a method for manufacturing a vehicle seat which includes a seatback accommodating an airbag device. The seat back includes: a top board part contactable with the back of an occupant; a bolster part located on a side of the top board part; a shoulder part located above the bolster part; a cover forming a surface of each of the bolster part and the shoulder part; and an airbag sleeve provided in at least one of the bolster part and the shoulder part to support the cover from inside when an airbag deploys. The airbag sleave includes: a first section sewn with at least one of first to fourth cover pieces along a first tear line or a second tear line; and a second section sewn with at least one of a set of the first cover piece and the third cover piece and a set of the second cover piece and the fourth cover piece in such a manner as to enclose and sandwich a seam allowance extending along a first lateral directional line or a second lateral directional line. The method includes: a cover piece preparation step of preparing, as components constituting the cover, the first cover piece to be located on the bolster part and adjoin the top board part, the second cover piece to be located on the bolster part and be on a frame side farther away from the top board part than the first cover piece, the third cover piece to be located on the shoulder part and adjoin an upper side of the first cover piece, and the fourth cover piece to be located on the shoulder part and adjoin an upper side of the second cover piece; a first section sewing step of sewing the first section of the airbag sleeve with at least one of the first to fourth cover pieces; a tear line sewing step of sewing the first cover piece and the second cover piece together along the first tear line extending in a longitudinal direction of the seatback, and sewing the third cover piece and the fourth cover piece together along the second tear line extending in the longitudinal direction; a lateral directional line sewing step of sewing the first cover piece and the third cover piece together along the first lateral directional line extending in a crossing direction intersecting the first tear line, and sewing the second cover piece and the fourth cover piece together along the second lateral directional line extending continuously from the first lateral directional line in the crossing direction; and a second section sewing step of sewing the second section of the airbag sleeve with at least one of the set of the first cover piece and the third cover piece and the set of the second cover piece and the fourth cover piece in such a manner as to enclose and sandwich the seam allowance extending along the first lateral directional line or the second lateral directional line. In the first section sewing step, the first section is sewn with at least one of the first to fourth cover pieces along the first tear line or the second tear line.

This configuration has a feature in: the first section sewing step of sewing the first section of the airbag sleeve with at least one of the first to fourth cover pieces along the first tear line or the second tear line; and the second section sewing step to be subsequently executed to sew the second section of the airbag sleeve with at least one of the set of the first cover piece and the third cover piece and the set of the second cover piece and the fourth cover piece in such a manner as to enclose the seam allowance extending in the first lateral directional line or the second lateral directional line. This allows the first lateral directional line or the second lateral directional line each serving as a boundary between the shoulder part and the bolster part to form a three-dimensional section as been pulled in, and a seat having high designability can be provided.

In the second section sewing step, the second section of the airbag sleeve is sewn across or to intersect the seam allowance extending along the first lateral directional line or the second lateral directional line, and thus, a tearing strength of the first lateral directional line or the second lateral directional line increases. This prevents the first lateral directional line or the second lateral directional line from tearing prior to the first tear line and the second tear line, and enables the airbag to smoothly deploy as intended. As a result, it is possible to manufacture a seat that achieves control of a deployment speed.

In the method for manufacturing a vehicle seat, the first section sewing step and the tear line sewing step are preferably simultaneously executed in a state where the first section of the airbag sleeve overlaps at least one of the first to fourth cover pieces along the first tear line or the second tear line.

This configuration enables simultaneous execution of sewing of the first section of the airbag sleeve and sewing of cover pieces together along a tear line, resulting in improving the operability.

Conclusively, a vehicle seat in the embodiment has high designability and achieves control of a deployment speed of a side airbag.

A method for manufacturing a vehicle seat in the embodiment enables manufacturing of a vehicle seat that has high designability and achieves control of a deployment speed of a side airbag.

## Claims

1. A vehicle seat, comprising:
a seatback accommodating an airbag device therein, wherein
the seatback includes:
a top board part contactable with the back of an occupant;
a bolster part located on a side of the top board part;
a shoulder part located above the bolster part;
a cover forming a surface of each of the bolster part and the shoulder part; and
an airbag sleeve provided in at least one of the bolster part and the shoulder part to support the cover from inside when an airbag deploys,
the cover includes;
a first cover piece located on the bolster part and adjoining the top board part;
a second cover piece located on the bolster part and being on a frame side farther away from the top board part than the first cover piece;
a third cover piece located on the shoulder part and adjoining an upper side of the first cover piece; and
a fourth cover piece located on the shoulder part and adjoining an upper side of the second cover piece; and
the first cover piece and the second cover piece being sewn together along a first tear line extending in a longitudinal direction of the seatback,
the third cover piece and the fourth cover piece being sewn together along a second tear line extending continuously from the first tear line in the longitudinal direction,
the first cover piece and the third cover piece being sewn together along a first lateral directional line extending in a crossing direction intersecting the first tear line,
the second cover piece and the fourth cover piece being sewn together along a second lateral directional line extending continuously from the first lateral directional line in the crossing direction, and
the airbag sleeve includes:
a first section extending along the first tear line or the second tear line; and
a second section extending across the first lateral directional line or the second lateral directional line,
the first section being sewn with at least one of the first to fourth cover pieces along the first tear line or the second tear line,
the second section being sewn with at least one of a set of the first cover piece and the third cover piece and a set of the second cover piece and the fourth cover piece in such a manner as to enclose and sandwich a seam allowance extending along the first lateral directional line or the second lateral directional line.

2. The vehicle seat according to claim 1, wherein the bolster part accommodates the airbag device,
the first section is sewn with the second cover piece along the first tear line, and
the second section is sewn with the set of the second cover piece and the fourth cover piece in such a manner as to enclose and sandwich the seam allowance extending along the second lateral directional line.

3. The vehicle seat according to claim 1, wherein the second section is sewn with an overlapping part of respective ends of the first cover piece and the third cover piece in a seam allowance extending along the first lateral directional line or with an overlapping part of respective ends of the second cover piece and the fourth cover piece in the seam allowance extending along the second lateral directional line in a state of enclosing and sandwiching the overlapping part.

4. A method for manufacturing a vehicle seat which includes a seatback accommodating an airbag device, the seatback including: a top board part contactable with the back of an occupant;
a bolster part located on a side of the top board part; a shoulder part located above the bolster part;
a cover forming a surface of each of the bolster part and the shoulder part; and an airbag sleeve provided in at least one of the bolster part and the shoulder part to support the cover from inside when an airbag deploys, the airbag sleeve including: a first section sewn with at least one of first to fourth cover pieces along a first tear line or a second tear line; and a second section sewn with at least one of a set of the first cover piece and the third cover piece and a set of the second cover piece and the fourth cover piece in such a manner as to enclose and sandwich a seam allowance extending along a first lateral directional line or a second lateral directional line,
the method comprising:
a cover piece preparation step of preparing, as components constituting the cover, the first cover piece to be located on the bolster part and adjoin the top board part, the second cover piece to be located on the bolster part and be on a frame side farther away from the top board part than the first cover piece, the third cover piece to be located on the shoulder part and adjoin an upper side of the first cover piece, and the fourth cover piece to be located on the shoulder part and adjoin an upper side of the second cover piece;
a first section sewing step of sewing the first section of the airbag sleeve with at least one of the first to fourth cover pieces;
a tear line sewing step of sewing the first cover piece and the second cover piece together along the first tear line extending in a longitudinal direction of the seatback, and sewing the third cover piece and the fourth cover piece together along the second tear line extending in the longitudinal direction;
a lateral directional line sewing step of sewing the first cover piece and the third cover piece together along the first lateral directional line extending in a crossing direction intersecting the first tear line, and sewing the second cover piece and the fourth cover piece together along the second lateral directional line extending continuously from the first lateral directional line in the crossing direction; and
a second section sewing step of sewing the second section of the airbag sleeve with at least one of the set of the first cover piece and the third cover piece and the set of the second cover piece and the fourth cover piece in such a manner as to enclose and sandwich the seam allowance extending along the first lateral directional line or the second lateral directional line, wherein,
in the first section sewing step, the first section is sewn with at least one of the first to fourth cover pieces along the first tear line or the second tear line.

5. The method for manufacturing a vehicle seat according to claim 4, wherein the first section sewing step and the tear line sewing step are simultaneously executed in a state where the first section of the airbag sleeve overlaps at least one of the first to fourth cover pieces along the first tear line or the second tear line.
